## Europäisches Patentamt

## European Patent Office

## Office européen des brevets

(19)

(11) Veröffentlichungsnummer: **0 178 526**
**B1**

(12)

# EUROPÄISCHE PATENTSCHRIFT

(45) Veröffentlichungstag der Patentschrift:
**18.01.89**

(51) Int. Cl.⁴: **C 01 B 25/18, B 01 J 19/28**

(21) Anmeldenummer: **85112386.9**

(22) Anmeldetag: **01.10.85**

(54) **Vorrichtung zur Reduktion von Eisen und Vanadium in phosphorsaurer Lösung.**

(30) Priorität: **15.10.84 DE 3437689**

(43) Veröffentlichungstag der Anmeldung:
**23.04.86 Patentblatt 86/17**

(45) Bekanntmachung des Hinweises auf die Patenterteilung:
**18.01.89 Patentblatt 89/3**

(84) Benannte Vertragsstaaten:
**BE DE FR GB NL**

(56) Entgegenhaltungen:
**EP-A- 0 053 694**
**FR-A- 2 317 223**
**US-A- 4 374 805**

(73) Patentinhaber: **HOECHST AKTIENGESELLSCHAFT,**
**Postfach 80 03 20, D-6230 Frankfurt am Main 80 (DE)**

(72) Erfinder: **Ressel, Herbert, Dr., Am Kapellenbusch 29,**
**D-5042 Erftstadt (DE)**
Erfinder: **Westphal, Wilhelm, Am Pappelbusch 26,**
**D-5040 Brühl (DE)**

ACTORUM AG

## Beschreibung

Die vorliegende Erfindung betrifft eine Vorrichtung zur Reduktion von Eisen und Vanadium in phosphorsaurer Lösung, insbesondere in Nassverfahrensphosphorsäure, mit Hilfe eines körnigen Reduktionsmittels.

Es ist bekannt, Eisen und Vanadium – sowie auch andere Schwermetallionen, die in ihren höheren Oxidationsstufen vorliegen, wie beispielsweise $U^{6+}$ und $Cr^{6+}$ – in phosphorsaurer Lösung mit Hilfe von Reduktionsmitteln in Form eines Festbettes zu reduzieren.

Als Reduktionsmittel wurden in diesen Fällen beispielsweise Ferrosilicum (US-A-4374805), Eisenoxide (DE-A-2528896) oder roter Phosphor (EP-A-0053694) eingesetzt und die Umsetzung in Kolonnen durchgeführt.

Dabei hat sich jedoch herausgestellt, dass die Reaktion vor allem in Nassverfahrensphosphorsäure nach anfänglich gutem Verlauf rasch zum Erliegen kommt, so das eine kontinuierliche Arbeitsweise im grosstechnischen Massstab praktisch nicht möglich ist.

Wie sich gezeigt hat, sind die Ursachen hierfür unter anderem darin zu suchen, dass sich in dem Festbett Kanäle ausbilden, durch welche die Lösung ohne zu reagieren strömen kann, und dass die einzelnen Festbetteilchen an ihrer Oberfläche mit einer schwerlöslichen Kruste überzogen werden, die sie inaktiv macht. Diese Verkrustungen bilden sich, je nach Herkunft der phosphorsauren Lösung, mehr oder weniger rasch aus.

Überraschenderweise konnten die Nachteile der bekannten Arbeitsweisen durch den Einsatz der erfindungsgemässen Vorrichtung vermieden werden.

Das Prinzip dieser Vorrichtung ist beispielsweise in der nachfolgenden Zeichnung verdeutlicht. Diese Vorrichtung besteht aus einer um ihre Querachse drehbar angeordnete Trommel 1, die zum Teil – etwa bis zur Hälfte – mit körnigem, vorzugsweise auf eine Korngrösse von 1 bis 10 mm gebrochenem Reduktionsmittel gefüllt und mit Zuführungen für die phosphorsaure Lösung 4, das Reduktionsmittel 2, sowie für ein Inertgas 5, wie z.B. Stickstoff, und mit einem Ablauf 7 für das Reaktionsprodukt versehen ist.

Vorteilhafte Ausgestaltungen dieser Vorrichtung bestehen z.B. darin, dass in der Trommel 1 mehrere Schikanen 6 eingebaut sind, welche das körnige Reduktionsmittel während des Trommelumlaufs nach oben transportieren und durch die phosphorsaure Lösung zurückfallen lassen,

– dass die Zuführungen 2, 4 und 5 über eine Stopfschnecke 3 mit der Trommel 1 verbunden sind,

– dass der Ablauf 7 als ein hochgestelltes, feststehendes Überlaufrohr ausgebildet ist, das im oberen Teil der Trommel 1 endet, wodurch das Reaktionsvolumen völlig ausgenutzt und die Verweilzeit der phosphorsauren Lösung in der Trommel 1 verlängert werden kann,

– dass der Zuführung 2 für die phosphorsaure Lösung ein – nicht gezeichneter – Wärmeaustauscher zum Aufheizen der Lösung vorgeschaltet ist,

– dass die Trommel 1 über ein Kettenrad 8 mit einem in der Drehzahl regulierbaren Getriebemotor verbunden ist, womit die für die Reaktion optimale Drehzahl, vorwiegend 0,2 – 4,0 UpM, eingestellt werden kann, und

– dass die Trommel 1 auf einer Wiegeeinrichtung 9 steht, mit deren Hilfe der Verbrauch an Reduktionsmittel festgestellt werden kann, welches im entsprechenden Masse ergänzt wird.

Vorteilhafterweise ist an den Ablauf 7 ein mit einem Rührwerk 11 versehener Behälter 10 angeschlossen, der dazu dient, das aus der Trommel 1 mit der Lösung ausgeschwemmte feinteilige Reduktionsmittel nachreagieren zu lassen, welches sich im geringen Umfang während des Brechens des Reduktionsmittels und während der Umsetzung in der Trommel gebildet hat. Dieser Behälter 10 besteht in seiner unteren Hälfte aus einem unten geschlossenen Zylinder, der oben über einen konisch geformten Zwischenteil mit einem oben geschlossenen weiteren Zylinder verbunden ist, welcher einen grösseren Durchmesser als der untere Zylinder besitzt, wobei der untere Zylinder an seinem unteren Ende mit dem Ablauf 7 verbunden und der obere Zylinder an seinem oberen Ende mit einem Ausflussrohr 12 versehen ist, das in einem mit einem Auslauf 14 versehenen geschlossenen Sammelgefäss 13 mündet.

Zweckmässigerweise sind jeweils am Kopf des Behälters 10 und des Sammelgefässes 13 ebenfalls Zuführungen 15 und 16 für das Inertgas angebracht.

Die oben beschriebene Ausführungsform des Behälters 10 ermöglicht es, dass im oberen Teil mit grösserem Durchmesser die mitgerissenen Reduktionsmittelteilchen sedimentieren und dann im unteren schmäleren Teil nachreagieren können, wobei sie durch das an die Wandung angepasste Rührwerk 11 in Bewegung gehalten werden.

Empfehlenswert ist es, wenn der Behälter 10 mit einem Rührwerk 11 versehen ist, welches doppelarmig ist, wobei der eine Arm der Wandung des konisch geformten Zwischenteils angepasst ist.

Zusammen mit dem feinteiligen Reduktionsmittel werden aus der Trommel 1 auch die bei der Umsetzung entstandenen und abgeriebenen Verkrustungen des körnigen Reduktionsmittels ausgeschwemmt, so dass die phosphorsaure Lösung ohne Zwischenfiltration direkt weiterverarbeitet, d.h. in erster Linie neutralisiert werden kann.

Als Reduktionsmittel eignen sich im besonderen Masse Ferrophosphor sowie Ferrosilicium, Eisenoxide oder roter Phosphor.

Die Arbeitsweise der erfindungsgemässen Vorrichtungen sei anhand des nachfolgenden Beispiels verdeutlicht, ohne die Erfindung auf den Inhalt dieses Beispiels beschränken zu wollen.

Beispiel: In die Trommel 1 mit einem Durchmesser von 0,8 m und einer Länge von 3 m, die im Inneren mit 6 Schikanen 6 ausgerüstet ist, werden 1,6 t gebrochener Ferrophosphor (<10 mm, Feinanteil <0,5 mm 3,8 %) eingefüllt. Der Ferropho-

sphor hat die Zusammensetzung 22,9% P, 4,7% Si, 2,4% Ti, Rest Fe.

Die Trommel 1 wird kontinuierlich bei einer Umdrehungszahl von 2 UpM über die Zuführung 4 und die Stopfschnecke 3 mit 7 $m^3$/h 80–90 °C heisser Phosphorsäure folgender Zusammensetzung beschickt: 27,9 Gew% $P_2O_5$, 123 ppm V in Form von $V^{5+}$ und 0,2% Fe-gesamt mit einem Anteil von $Fe^{2+}$ von 0,02%. Durch den als Überlauf ausgebildeten Ablauf 7 fliesst die phosphorsaure Lösung in den unteren Teil des Behälters 10, der mit einem doppelarmigen Rührwerk 11 ausgerüstet ist. In diesem Behälter kann mit der Lösung ausgeschwemmter feinteiliger Ferrophosphor ausreagieren und sich zusammen mit gleichfalls ausgeschwemmten, abgeriebenen Verkrustungen absetzen. Die klare Lösung tritt dann aus dem Abflussrohr 12 am Kopf des Behälters 10 in ein Sammelgefäss 13 über, aus dessen Auslauf 14 das Reaktionsprodukt mit 0,23 Gew% Fe (insgesamt) und 0,22 Gew% $Fe^{2+}$ sowie 115 ppm $V^{4+}$ entnommen wird.

Die während der Umsetzung verbrauchte Ferrophosphormenge wird mit Hilfe der Wiegeeinrichtung 9 ermittelt und über die Zuführung 2 und Stopfschnecke 3 laufend ergänzt. Die ganze Umsetzung findet unter Stickstoffatmosphäre statt. Zu diesem Zweck wird der Stickstoff über die Zuführung 5 in die Trommel 1, über die Zuführung 16 in den Behälter 10 und über Zuführung 15 in das Sammelgefäss 13 eingeleitet. Im Verlauf von 95 Stunden werden in der Vorrichtung 725 $m^3$ Phosphorsäure umgesetzt. Eine durch Neutralisation des Umsetzungsproduktes hergestellte Dinatriumphosphatlösung enthält nach Filtration des dabei ausgefällten Niederschlages 18,5 Gew% $P_2O_5$, 4,5 ppm Vanadium und 7 ppm Eisen.

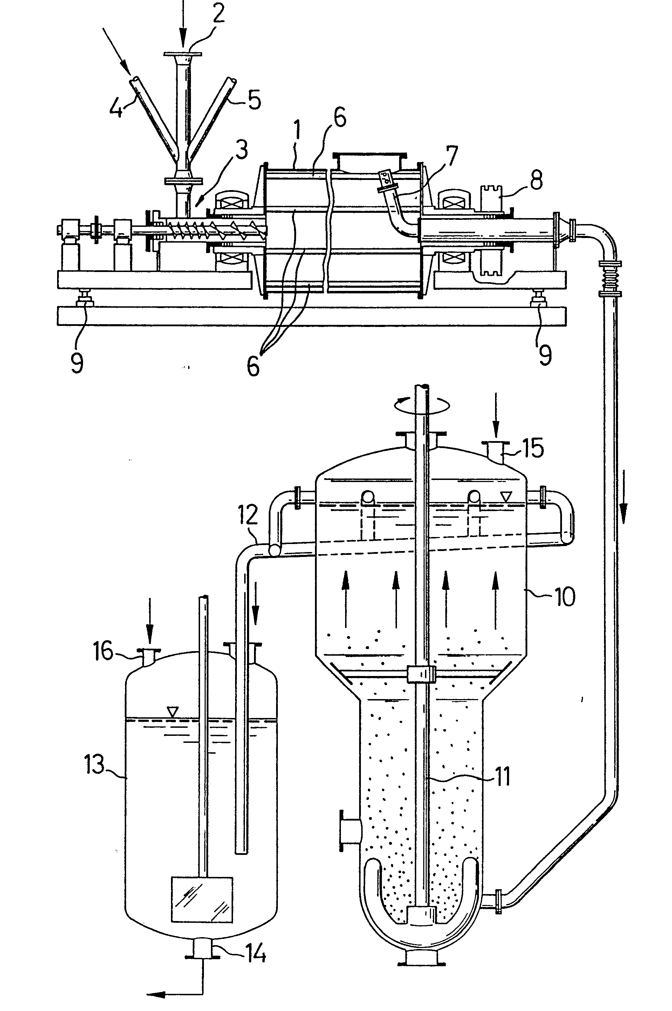

## Patentansprüche

1. Vorrichtung zur Reduktion von Eisen und Vanadium in phosphorsaurer Lösung mit Hilfe eines körnigen Reduktionsmittels, wobei diese Vorrichtung aus einer um ihre Querachse drehbar angeordnete Trommel (1) besteht, die zum Teil mit dem körnigen Reduktionsmittel gefüllt und mit Zuführungen für die phosphorsaure Lösung (4), das körnige Reduktionsmittel (2) sowie ein Inertgas (5) und mit einem Ablauf (7) für das Reaktionsprodukt versehen ist, dadurch gekennzeichnet, dass der Ablauf (7) als Überlaufrohr ausgebildet ist, das im oberen Teil der Trommel (1) endet.

2. Vorrichtung nach Anspruch 1, dadurch gekennzeichnet, dass die Zuführungen (2, 4 und 5) über eine Stopfschnecke (3) mit der Trommel verbunden sind.

3. Vorrichtung nach Anspruch 1 oder 2, dadurch gekennzeichnet, dass an den Ablauf (7) ein mit einem Rührwerk (11) versehener Behälter (10) angeschlossen ist, der in seiner unteren Hälfte aus einem unten geschlossenen Zylinder besteht, der oben über einen konisch geformten Zwischenteil mit einem oben geschlossenen Zylinder verbunden ist, welcher einen grösseren Durchmesser als der untere Zylinder besitzt, wobei der untere Zylinder an seinem unteren Ende mit dem Ablauf (7) verbunden und der obere Zylinder an seinem oberen Ende mit einem Ausflussrohr verbunden ist.

4. Vorrichtung nach Anspruch 3, dadurch gekennzeichnet, dass der Behälter (10) mit eine Rührwerk (11) versehen ist, wobei der eine Arm der Wandung des unteren Behälterteils und der andere Arm der Wandung des konisch geformten Zwischenteils angepasst ist.

5. Vorrichtung nach mindestens einem der Ansprüche 1 bis 4, dadurch gekennzeichnet, dass die Trommel (1) mit Ferrophosphor, Ferrosilicium, Eisenoxiden oder rotem Phosphor aus körnigen Reduktiönsmitteln gefüllt ist.

## Claims

1. An apparatus for reducing iron and vanadium in phosphoric acid solution with the aid of a granular reducing agent, this apparatus comprising a drum (1) which is arranged so as to be rotatable about its transverse axis, is partly filled with the granular reducing agent and is provided with supply lines for the phosphoric acid solution (4), the granular reducing agent (2) and an inert gas (5) and with an outlet (7) for the reaction product, wherein the outlet (7) is designed as an overflow pipe which terminates in the upper part of the drum (1).

2. The apparatus as claimed in claim 1, wherein the supply lines (2, 4 and 5) are connected to the drum (1) via a feed screw (3).

3. The apparatus as claimed in claim 1 or 2, wherein a tank (10) is connected to the outlet (7), the tank being provided with a stirrer (11) and comprising, in its lower half, a cylinder which is sealed at the bottom and connected at the top, via a conical intermediate part, to a cylinder which is sealed at the top and has a larger diameter than the lower cylinder, the lower cylinder being connected at its lower end to the outlet (7) and the upper cylinder being connected at its upper end to a discharge pipe (12).

4. The apparatus as claimed in claim 3, wherein the tank (10) is provided with a twin-arm stirrer (11), the one arm being shaped to the wall of the lower part of the tank and the other arm being shaped to the wall of thew conical intermediate part.

5. The apparatus as claimed in at least one of claims 1 to 4, wherein the drum (1) is filled with ferrophosphorus, ferrosilicon, iron oxides or red phosphorus as granular reducing agents.

## Revendications

1. Installation pour la réduction du fer et du vanadium dans une solution d'acide phosphorique à l'aide d'un agent réducteur en grains, cette installation consistant en un tambour (1) disposé mobile autour de son axe transversal qui est partiellement rempli avec l'agent de réduction en grains et qui est muni de conduites d'amenée pour la solution d'acide phosphorique (4), l'agent réducteur en grains (2) et un gaz inerte (5) et une

conduite d'écoulement (7) pour le produit de réaction, caractérisée en ce que la conduite d'écoulement (7) pour le produit de réaction, caractérisée en ce que la conduite d'écoulement (7) a la forme d'un tube de trop-plein qui se termine dans la partie supérieure du tambour (1).

2. Installation selon la revendication 1, caractérisé en ce que les conduites d'amenée (2, 4 et 5) sont reliées au tambour (1) par l'intermédiaire d'une vis-bouchon (3).

3. Installation selon la revendication 1 ou 2, caractérisée en ce que le tube d'écoulement (7) est raccordée en aval à une récipient (10) muni d'un agitateur (11), qui consiste dans sa moitié inférieure en un cylindre fermé dans le bas, qui est relié par une partie intermédiaire conique à un cylindre fermé dans le haut, de diamètre plus grand que le cylindre inférieur, le cylindre inférieur étant relié à son extrémité inférieure avec le tube d'écoulement (7) et le cylindre supérieur à son extrémité supérieure avec le tube d'écoulement (12).

4. Installation selon la revendication 3, caracterisée en ce que le récipient (10) muni d'un agitateur (11) a deux bras, un bras étant adapté à la paroi de la date intermédiaire de forme conique.

5. Installation selon l'une au moins des revendications 1 à 4, caractérisée en ce que le tambour (1) est rempli avec du ferrophosphore, du ferrosilicium, des oxydes de fer ou de phosphore rouge comme agents réducteurs en grains.